# EUROPEAN PATENT APPLICATION

(11) **EP 4 451 191 A1**
(43) Date of publication of application: **23.10.2024**
(21) Application number: 23169110.6
(22) Date of filing: 21.04.2023
(51) Int. Cl.: G06Q 20/04, G06Q 20/32, G07B 15/00, G07C 9/00, G06Q 20/40, G06Q 20/38, G06Q 20/42

(54) **SYSTEMS AND METHODS FOR MULTI-FACTOR TICKET VALIDATION BASED ON BLUETOOTH TOKEN VALIDATED BY HIGH FREQUENCY DATA OVER VOICE TOKEN**

(71) Applicant: Margento R&D d.o.o., 2000 Maribor (SI)
(72) Inventor: Igrec, Dalibor, 2000 Maribor (SI); Urbanija, Milos, 1411 Izlake (SI); Schmidt, Ziga, 1234 Menges (SI)
(74) Representative: Kurig, Thomas

(57) **Abstract**

The invention relates to a system and methods for automatic, fast and secure ticket validation based on Bluetooth token validated by High Frequency Data over Voice token.

## Description

### FIELD OF THE INVENTION

The present invention refers to the system and methods that allow automatic wireless ticket multi-factor validation (MFV) based on Bluetooth (BT) token validated by High Frequency Data-over-Voice (HF DOV) token (hereinafter referred to as BT/HF token). Using BT and HF DOV as an MFV can speed up and simplify the validation process, enhance the security of the validation process, as it requires both the Bluetooth token and the audio signal to be synchronously authenticated. This can help prevent unauthorized access or spoofing of the validation process, providing a more secure and reliable system for public transportation.

The key advantage of the method is the simultaneous validation of a large number of users, as they all accept the same BT/HF token, which, when received in the mobile application, is additionally equipped with the user's data and sent to the backend system for confirmation.

### SUMMARY

There are several technological ways that public transit authorities can use to facilitate passenger validation. These include:
- Contactless smart cards: Public transit authorities can issue contactless smart cards that passengers can use to pay for their rides. These smart cards can be loaded with a specific amount of money or linked to a bank account, making it easier for passengers to pay for their rides without the need for cash. To validate the card, passengers can tap it on a reader as they board the vehicle.
- Mobile ticketing: Mobile ticketing allows passengers to purchase and validate their tickets using their mobile phones. Passengers can download a mobile app provided by the public transit authority, purchase a ticket, and then validate it by displaying the ticket on their phone screen as they board the vehicle. This technology is convenient for passengers as they do not need to carry cash or a physical ticket.
- QR codes: Public transit authorities can issue tickets with QR codes that passengers can scan using their mobile phones to validate their tickets. Passengers can purchase tickets online or through a mobile app, and once they board the vehicle, they can scan the QR code displayed on the ticket to validate it.
- Near Field Communication (NFC): NFC technology allows passengers to validate their tickets by tapping their mobile phones or smart cards on a reader as they board the vehicle. This technology is fast and convenient for passengers and helps to reduce the time it takes to validate tickets.
- Biometric authentication: Biometric authentication technology uses facial recognition or fingerprint scanning to validate passengers. Passengers can register their biometric data with the public transit authority and then use it to board vehicles without the need for physical tickets or smart cards.
- Automatic Number Plate Recognition (ANPR): ANPR technology can be used to automatically validate vehicles as they enter the transit system. This technology reads the license plate of the vehicle and checks it against a database to ensure that the vehicle is authorized to enter the system.
- Radio Frequency Identification (RFID): RFID technology uses radio waves to validate passengers as they board the vehicle. Passengers can carry an RFID-enabled smart card, which can be read by a reader installed on the vehicle.

These technologies offer convenience and speed for passengers while also improving the accuracy of fare collection for public transit authorities. The choice of technology used will depend on various factors such as cost, scalability, and ease of implementation.

### Bluetooth validation in public transportation

Bluetooth and beacon technologies can also be used for passenger validation in public transportation systems. Here are some possible ways they can be utilized:
- Bluetooth: Bluetooth technology can be used to detect the presence of passengers on board the vehicle. Public transit authorities can install Bluetooth beacons on the vehicle that detect the presence of Bluetooth-enabled devices such as smartphones. When a passenger enters the vehicle, their Bluetooth device is detected, and the passenger is considered validated. This technology can be used in conjunction with other validation methods such as mobile ticketing or smart cards.
- Beacons: Beacon technology can be used to provide passengers with location-based information about the transit system. Public transit authorities can install beacons at key locations such as bus stops or train stations. When a passenger with a Bluetooth-enabled device comes within range of a beacon, they receive relevant information such as real-time schedules, service disruptions, or fare information. Beacons can also be used to detect the presence of passengers and validate their tickets using Bluetooth technology.

Fraud possibilities are one of the major concerns that transit authorities need to consider when implementing Bluetooth validation on public transportation. These fraud possibilities can undermine the effectiveness and efficiency of the validation system, leading to revenue losses for transit authorities. Here are some of the most common fraud possibilities associated with Bluetooth validation:
- Ticket Sharing: Bluetooth validation relies on the use of Bluetooth-enabled devices, such as smartphones, to detect the presence of passengers and validate their tickets. However, passengers may share their devices with others to gain unauthorized access to the transit system or to evade fares. For example, a passenger may lend their smartphone to a friend or family member who doesn't have a valid ticket, allowing them to board the transit vehicle without paying. This can result in lost revenue for transit authorities and lead to overcrowding on transit vehicles.
- Cloning: Cloning refers to the act of copying a valid Bluetooth validation signal and using it on multiple devices. This can allow multiple passengers to board the transit vehicle using a single valid Bluetooth validation signal, resulting in lost revenue for transit authorities. Cloning can be done through a variety of methods, such as using Bluetooth sniffing software or other hacking techniques.
- Device Spoofing: Device spoofing involves the use of fake or counterfeit Bluetooth-enabled devices to trick the validation system into thinking that a passenger is present. For example, a passenger may use a counterfeit Bluetooth-enabled device to create a false validation signal, allowing them to board the transit vehicle without paying. This can be difficult to detect, as the spoofed device may appear to be a legitimate Bluetooth-enabled device.

To prevent these fraud possibilities, transit authorities may need to implement additional security measures, such as biometric authentication or multi-factor authentication, to ensure that only authorized passengers are able to validate their tickets using Bluetooth technology. Additionally, transit authorities may need to invest in regular monitoring and enforcement to identify and address fraudulent behavior, such as conducting random checks or using security cameras to deter fraudulent behavior. Overall, it is important for transit authorities to take a proactive approach to identifying and mitigating fraud possibilities to ensure the effectiveness and sustainability of the Bluetooth validation system.

### Using Multi-factor-authentication as a tool in public transportation validation

Multi-factor authentication (MFA) is a security measure that requires users to provide multiple forms of authentication to gain access to a system or service. In the case of Bluetooth validation on public transportation, MFA can be used to ensure that only authorized passengers are able to validate their tickets using Bluetooth technology. Here are some possible MFA options for Bluetooth validation:
- Biometric Authentication: Biometric authentication involves the use of unique physical characteristics, such as fingerprints or facial recognition, to verify a passenger's identity. Bluetooth-enabled devices can be equipped with biometric sensors to ensure that only the authorized passenger is able to validate their ticket. For example, a passenger may need to provide their fingerprint or facial recognition to unlock their smartphone and validate their ticket.
- One-Time Passwords: One-time passwords (OTPs) are temporary codes that are generated by a device or service and are used to verify a user's identity. OTPs can be sent to a passenger's Bluetooth-enabled device when they attempt to validate their ticket, ensuring that only the authorized passenger is able to access the transit system.
- SMS Verification: SMS verification involves the use of a verification code that is sent to a passenger's mobile phone via text message. The passenger must enter the code into the Bluetooth validation system to verify their identity and validate their ticket. This can help to prevent unauthorized access by requiring a separate device to be used for authentication.

Implementing MFA can significantly increase the security of Bluetooth validation on public transportation by reducing the risk of fraudulent behavior, such as ticket sharing or cloning. However, transit authorities need to carefully balance security with convenience to ensure that the validation process remains user-friendly and does not cause unnecessary delays or inconvenience for passengers. Additionally, transit authorities need to ensure that the chosen MFA method is compatible with the devices and operating systems used by most passengers, to avoid limiting the effectiveness of the Bluetooth validation system.

### High frequency Data-over-voice

High frequency data over voice (HF DOV) technology works by transmitting digital data over a voice channel using high-frequency audio signals. How HF DOV works in simple steps:
- Modulation: The digital data is modulated onto a high-frequency audio signal, typically in the range of 3 kHz to 24 kHz. The modulation process varies depending on the specific HF DOV system used.
- Transmission: The modulated audio signal is transmitted over a voice channel, which can be a radio channel, phone line, or any other voice communication channel.
- Demodulation: The receiving device receives the audio signal and demodulates it to retrieve the original digital data. The demodulation process is the reverse of the modulation process used at the transmitting end.
- Data processing: The received digital data is processed by the receiving device, which can be a computer, mobile device, or any other device capable of processing digital data.

One important aspect of HF DOV technology is that it uses audio signals to transmit data over a voice channel, which means that it can work even when other communication methods like Wi-Fi or cellular networks are unavailable or unreliable. HF DOV technology is also secure and reliable, as the audio signals can be encrypted and are less prone to interference compared to other communication methods.

In terms of proximity payments and verification, High Frequency Data over Voice (HF DOV) technology can be used to transmit payment or verification information between two devices using an audio signal over a voice channel.

For example, a customer can make a payment at a point-of-sale terminal using their mobile device equipped with an HF DOV system. The mobile device can transmit the payment information through an audio signal over a voice channel to the point-of-sale terminal, which can then process the payment. This can be particularly useful in situations where traditional payment methods like NFC or QR codes are not available or reliable.

Similarly, HF DOV technology can be used for identity verification, such as for authentication in financial transactions or access control. The user's identity information can be modulated onto an audio signal and transmitted over a voice channel to a receiving device for verification.

Overall, HF DOV technology provides a secure and reliable method for proximity payments and verification, particularly in situations where traditional payment or verification methods are not available or practical. However, the technology is not widely used in these contexts, and other methods like NFC or QR codes are more commonly used for proximity payments and verification.

### HF DOV in public transportation

High frequency data over voice (HF DOV) technology can be used for passenger validation in public transportation systems, such as buses or trains. Here's how it could work:
- Passenger boarding: When a passenger boards the vehicle, they would present their transportation pass, such as a smart card or a mobile ticket, to a reader device equipped with an HF DOV system.
- Modulation: The reader device would then modulate the pass information, such as the pass ID and expiration date, onto a high-frequency audio signal.
- Transmission: The modulated audio signal would be transmitted over a voice channel, which can be a speaker system or a dedicated communication channel, to the passenger's mobile device.
- Demodulation: The passenger's mobile device would receive the audio signal and demodulate it to retrieve the pass information.
- Validation: The passenger's mobile device would then validate the pass information, such as checking the pass ID against a database, and provide a confirmation to the reader device via the voice channel.
- Boarding approval: If the pass information is valid, the reader device would provide an approval signal, such as a green light or a beep, to the passenger, allowing them to board the vehicle.

The HF DOV system used for passenger validation would need to be secure and reliable, with encrypted audio signals and robust error correction mechanisms to ensure accurate data transmission. It would also need to be compatible with various types of transportation passes and mobile devices to accommodate a wide range of passengers. Overall, HF DOV technology can provide a cost-effective and efficient solution for passenger validation in public transportation systems, particularly in areas where traditional communication methods like Wi-Fi or cellular networks are unreliable.

While High Frequency Data over Voice (HF DOV) technology can provide a cost-effective and efficient solution for passenger validation in public transportation, there are also some potential dangers and negatives to consider:
- Security risks: Since HF DOV technology transmits data over a voice channel, it may be vulnerable to eavesdropping or interception by unauthorized individuals, especially if the audio signals are not encrypted. This could potentially lead to security breaches, such as theft of passenger information or unauthorized access to the transportation system.
- Reliability issues: HF DOV technology may be subject to interference or degradation of signal quality, especially in areas with high levels of noise or electromagnetic interference. This could result in inaccurate data transmission, leading to validation errors or delays in passenger boarding.
- Compatibility challenges: HF DOV systems used for passenger validation would need to be compatible with various types of transportation passes and mobile devices to accommodate a wide range of passengers. This could be challenging to achieve, especially if different transportation systems or vendors use different types of passes or devices.
- Limited data rate and bandwidth: HF DOV technology has limited data rate and bandwidth compared to other data communication technologies. This may be a limiting factor in situations where large amounts of data need to be transmitted, such as during peak travel periods.

Overall, while HF DOV technology can provide benefits for passenger validation in public transportation, it is important to carefully consider the potential dangers and negatives, and to implement appropriate security and reliability measures to mitigate these risks.

### HF DOV as an MFA for BLE validation

High Frequency Data over Voice (HF DOV) technology can be used as a multi-factor authentication (MFA) mechanism for Bluetooth validation in public transportation systems. Here's how it could work:
- Bluetooth validation request: When a passenger boards the vehicle, they would initiate a Bluetooth validation request from their mobile device to the vehicle's Bluetooth receiver, which is equipped with an HF DOV system.
- HF DOV authentication: The Bluetooth receiver would then send an authentication request to the passenger's mobile device via an audio signal modulated with HF DOV technology. The authentication request would contain a random challenge code that the passenger's mobile device needs to respond to.
- HF DOV response: The passenger's mobile device would receive the authentication request, demodulate the HF DOV audio signal, and generate an authentication response containing a unique digital signature of the challenge code.
- Bluetooth validation: The passenger's mobile device would then send the authentication response to the vehicle's Bluetooth receiver, which would validate the response against the original challenge code. If the response is valid, the Bluetooth receiver would provide a confirmation signal to the passenger's mobile device, indicating that the validation was successful.
- Boarding approval: If the Bluetooth validation is successful, the passenger's mobile device would receive a boarding approval signal, such as a green light or a beep, allowing them to board the vehicle.

Using HF DOV as an MFA mechanism for Bluetooth validation can enhance the security of the validation process, as it requires both the Bluetooth connection and the audio signal to be authenticated. This can help prevent unauthorized access or spoofing of the validation process, providing a more secure and reliable system for public transportation.

There are several benefits of using High Frequency Data over Voice (HF DOV) as a multi-factor authentication (MFA) mechanism for Bluetooth validation in public transportation systems:
- Enhanced security: By using HF DOV as an additional factor in the authentication process, the system can provide a higher level of security than using Bluetooth validation alone. This is because HF DOV requires the use of a unique and encrypted audio signal, which is more difficult to spoof or intercept than a standard Bluetooth signal.
- Improved reliability: HF DOV technology can improve the reliability of the Bluetooth validation process by providing a backup method for transmitting authentication data. If the Bluetooth signal is weak or fails, the HF DOV signal can still be used to transmit authentication data, ensuring that the validation process can continue.
- Cost-effective: HF DOV technology is a cost-effective solution for adding an additional layer of security to the Bluetooth validation process. Since HF DOV can be implemented using existing speaker systems and does not require additional hardware or infrastructure, it can be a cost-effective solution for public transportation systems.
- Compatible with a wide range of devices: HF DOV technology can be used with a wide range of devices, including older or non-smartphone devices that may not support Bluetooth or other wireless communication technologies. This can help ensure that all passengers can access the public transportation system, regardless of the device they are using.

Overall, using HF DOV as an MFA mechanism for Bluetooth validation can enhance the security and reliability of the public transportation system, while also providing a cost-effective and compatible solution for a wide range of devices.

### BRIEF DESCRIPTION OF THE FIGURES

The present invention may be more clearly understood by referring to the following figures and further details of the inventions that follow.

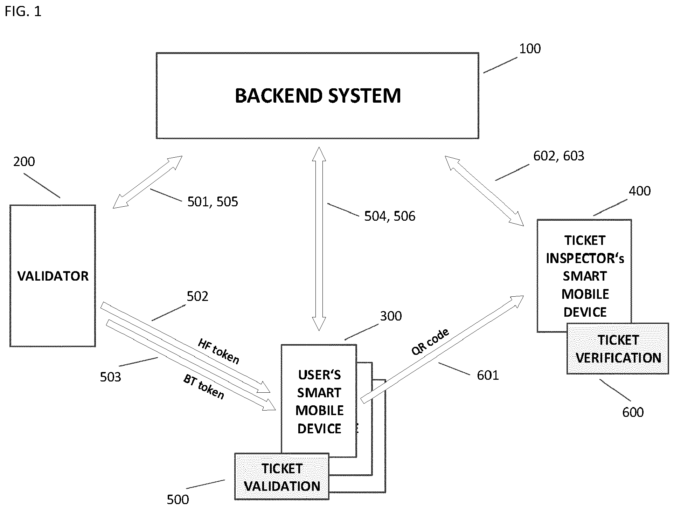

FIG. 1 is a schematic of a system for the Multi-Factor ticket Validation based on BT token validated by HF DOV token.

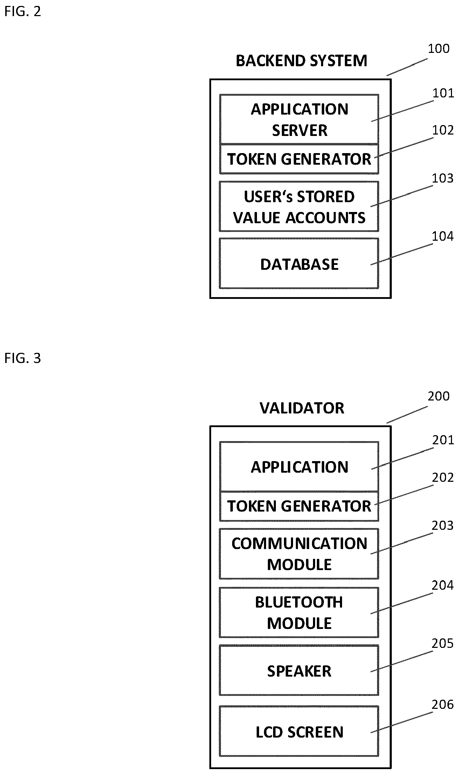

FIG. 2 is a schematic of the backend system.
FIG. 3 is a schematic of the validator.

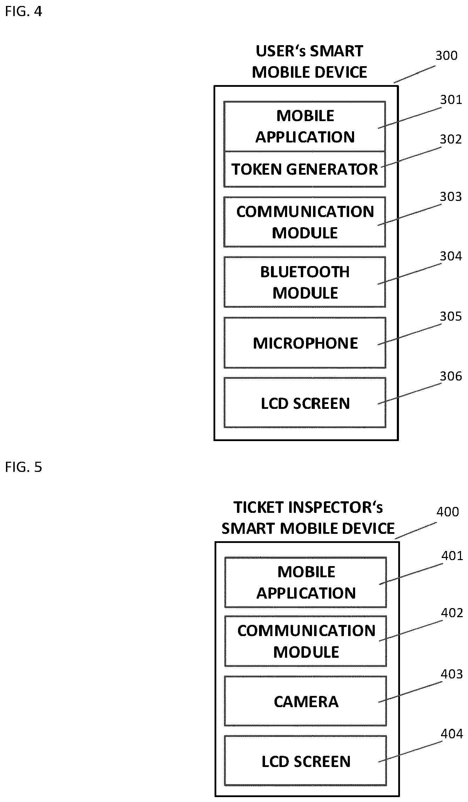

FIG. 4 is a schematic of the user's smart mobile device.
FIG. 5 is a schematic of the inspector's smart mobile device.

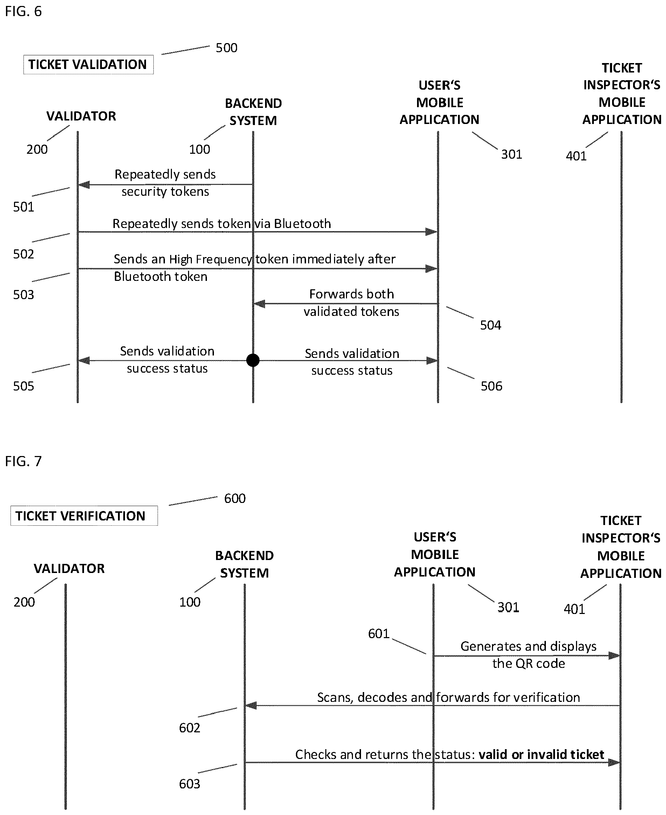

FIG. 6 is a schematic of the information flow in the ticket validation process.
FIG. 7 is a schematic of the information flow in the ticket verification process.

### FURTHER DETAILS OF THE INVENTIONS

The system consists of the following basic components:
- backend system (100), that generates security tokens, checks the rights of user ticket validations (500) and performs their ticket verification (600),
- validator (200), that receives security tokens from the backend system (100), generates BT and HF tokens and transmits them to their surroundings,
- mobile application (301) on the user's smart mobile device (300), that accepts BT and HF tokens and forwards them to the backend system (100) for ticket validation (500),
- mobile application (401) on the inspector's smart mobile device (400), that scans QR code from the user's mobile application (301) and forwards it to the backend system (100) for ticket verification purposes (600).

Basic tasks of the backend system (100), which contains the application server (101) with the database (104):
- with the help of a token generator (102), it generates a token specifically for each connected validator and sends it repeatedly (new token, timestamp, terminal ID and all other necessary information),
- receives BT/HF packets from users' mobile applications (301) that perform ticket validation and checks them according to the algorithm,
- in the received BT/HF package, all other necessary data, such as validator ID, user ID, line ID, station ID, type of ticket that the user wants to validate, is also provided,
- based on this, it checks the balance and rights on the user's SVA account (103),
- if all the parameters match, it performs the transaction (validation) of the ticket and sends this information to the mobile application (301), which notifies the user,
- it also sends information to the validator (200), who can display it on his LCD screen (206) and on the driver's unit to inform him about it.

Basic tasks of the application (201) on the validator (200):
- constantly receives a new basic token from the backend system (100) via the communication module (203), which is generated on the fly for the relevant validator and is only valid for a short, limited time,
- there are two ways of generating the token: in the backend (online mode 102) or on the validator (offline mode 202) - offline is in case when the validator does not have an active connection to the backend system (100),
- then validators application (201) adds the other necessary data to the received basic token that identifies it and adds additional protection (terminal ID, line ID, station ID, current timestamp ...),
- based on this data, it generates and constantly transmits a prepared BT token (Bluetooth advertising packet type) via its Bluetooth module (204),
- after that, based on the prepared BT token, validator generates an HF token and broadcast it via its speaker (205),
- after a certain time, it repeats this and performs it throughout the system's operation,
- when it receives information about successful user validation, it displays this on its LCD screen (206).

Basic steps during ticket validation on the mobile application (301) of a user's smart mobile device (300):
- the user starts the mobile application (301) on a smart mobile device (300) and activates the ticket validation process,
- the mobile application (301) activates the Bluetooth module (304) and microphone (305) and starts listening,
- after receiving the Bluetooth token, it waits for the reception of the HF token,
- when it receives the HF token, it checks the authenticity of the BT token with its content,
- if it doesn't match, it waits for the receipt of the next BT token (several validators in the vicinity generate and broadcast several BT tokens; even if they are on other vehicles, user's smart mobile device can receive them),
- if it matches, it received the correct BT/HF combination (the HF token confirms the BT token), the token is valid (the timestamp in the BT packet have not expired), so it sends this via communication module (303) to the backend system (100),
- when the backend system (100) finishes checking the ticket, it sends back the information that is displayed on the LCD screen (306).

Basic steps during ticket verification on the mobile application (401) of an inspector's smart mobile device (400):
- the user, who has an active ticket visible in his mobile application (301), initiates the generation of a QR code, internally generated with the help of a token generator (302),
- generated QR code is scanned by the camera (403) of the inspector's mobile application (401),
- the inspector's mobile application (401) sends the scanned QR code data to the backend system (100) for verification,
- the basic content of the QR code is a BT/HF token with additional encryption elements that prevent counterfeiting of the QR code,
- the backend system (100) checks the validity of the ticket based on the data from the QR code and sends a response status (valid or invalid), which is displayed on the LCD screen (404).

Information flow in the ticket validation (500) process:
- step 501: backend system (100) repeatedly sends new security tokens to the validators (200),
- step 502: based on the newly received security token, validator (200) constantly generates new BT tokens and sends them via internal Bluetooth module,
- step 503: right after that validator (200) generates new HF tokens and broadcasts them using internal speaker,
- step 504: user's mobile application (301) receives both tokens and checks their validity. If it matches, it adds the other necessary information and forwards it to the backend system (100),
- step 505, 506: with the help of algorithms, the backend system (100) checks all the necessary conditions and reports the success of the ticket validation - to the validator (505) and the user's mobile application (506).

Information flow in the ticket verification (600) process:
- step 601: based on active validation, the user's mobile application (301) generates and displays a QR code,
- step 602: ticket inspector's mobile application (401) scans, decodes and forwards data from the QR code to the backend system (100),
- step 603: backend system (100) checks the validity of the ticket based on the received data and returns the ticket verification status (valid or invalid ticket) to the inspector's mobile application (401).

## Claims

1. A method for automatic wireless ticket multi-factor validation based on validators Bluetooth (BT) token validated by High Frequency (HF) Data over Voice (DOV) token
**comprising**
the steps for ticket validation purposes:
- the validator constantly receives security tokens from the backend system,
- validator received token equips with the other necessary data and transmits it via the Bluetooth module,
- immediately after BT transmission, validator calculates a validation token from it and transmits it via HF DOV,
- user's mobile application receives a BT token and immediately afterwards an HF token,
- then, with the help of the HF token, it validates the BT token, which, in the event of a match, is forwarded to the backend system,
- in the backend system, the algorithms check the validity of all the data in the received token and send the response back to the user's mobile application and the validator,
- the user is informed in the mobile application about the status of the performed validation,
- the validator also receives information about the successful validation, which can then be displayed on its screen and/or on the screen of the driver's unit,

2. The method of claim 1,
**wherein**
validator receives security token from backend, covers:
- security token, which is only relevant to the sent validator, as it is additionally protected by the validator's ID,
- the received token has a short time validity,
- in the case of validators inactive mobile data connection, when it is not established with the backend system, the validator itself generates tokens that the backend system recognizes as appropriate, since the token generators between the validator and the backend system are synchronized,

3. The method of claim 1,
**wherein**
validator broadcasts Bluetooth token to the surrounding area:
- before submission, the received token from the backend system is additionally equipped with at least the user ID, validator ID, vehicle ID, bus line ID, bus stop ID, ticket type and timestamp of submission,
- additionally, validator encrypts it with a special security algorithm and thereby hides the content of the sent token,
- the encryption result represents the content of the sent BT token,

4. The method of claim 1,
**wherein**
validator broadcasts High-Frequency Data-over-Voice token to the surrounding area:
- based on the data of the last sent Bluetooth packet, an additional hash is calculated with the help of a security algorithm, which represents the encrypted checksum of the BT token,
- the encryption result represents the content of the sent HF token,

5. The method of claim 1,
**wherein**
validator broadcasts Bluetooth and High-Frequency Data-over-Voice tokens to the surrounding area:
- Bluetooth token is repeatedly sent as the standard advertising packet,
- High-Frequency token is broadcasted at the highest possible frequency that smart mobile devices can still receive, so as not to disturb the surroundings,

6. The method of claim 1,
**wherein**
mobile application receives BT token and then immediately HF token:
- validation of the BT token is done with the HF token,
- the same security algorithm as in the validator is used,
- validation is successful only when the last received HF token successfully validates the content of the previously received BT token,

7. The method of claim 1,
**wherein**
backend receives the data from the user's mobile application:
- algorithms check the validity of the received BT/HF token equipped with additional data,
- if the received package is valid, the balance on the user's stored value account (SVA), rights to the desired type of ticket and all other received information are additionally checked,
- based on the result, the algorithm decides whether the validation is successful or not,

8. The method of claim 1,
**wherein**
mobile application for ticket verification comprising the steps of:
- the user's mobile application generates a QR code and displays it on the LCD screen,
- the inspector's mobile application scans the QR code and locally checks the validity of the scanned data,
- if the data is appropriate, it is sent to the backend system for verification,
- the backend system decrypts the received data, checks the content, compares it with the data in the database and returns a response to the inspector's mobile application,
- in this way, the inspector obtains information about the ticket status (valid or invalid),

9. The method of claim 1,
**wherein**
user's mobile application generates a QR code for ticket verification purposes:
- the algorithm encrypts the data of the already confirmed ticket validation, which is securely stored in the mobile application storage,
- encrypted content represents the data that is written in QR code format and is displayed in the mobile application to be scanned by the inspector.

## Amended claims

### Amended claims in accordance with Rule 137(2) EPC.

1. A method for automatic wireless ticket multi-factor validation, **characterized in that** the method is based on validators Bluetooth, BT, token validated by High Frequency, HF, Data over Voice, DOV, token
**the method comprising**
the steps for ticket validation purposes:
- the validator (200) constantly receives security tokens from the backend system (100),
- validator (200) received token equips with the other necessary data and transmits it via the Bluetooth module,
- immediately after BT transmission, validator (200) calculates a validation token from it and transmits it via HF DOV,
- user's mobile application (301) receives a BT token and immediately afterwards an HF token,
- then, with the help of the HF token, it validates the BT token, which, in the event of a match, is forwarded to the backend system (100),
- in the backend system (100), the algorithms check the validity of all the data in the received token and send the response back to the user's mobile application (301) and the validator (200),
- the user is informed in the mobile application (301) about the status of the performed validation,
- the validator (200) also receives information about the successful validation, which can then be displayed on its screen and/or on the screen of the driver's unit,

2. The method of claim 1,
**wherein**
validator (200) receives security token from backend, covers:
- security token, which is only relevant to the sent validator (200), as it is additionally protected by the validator's ID,
- the received token has a short time validity,
- in the case of validators inactive mobile data connection, when it is not established with the backend system (100), the validator (200) itself generates tokens that the backend system (100) recognizes as appropriate, since the token generators between the validator (200) and the backend system (100) are synchronized,

3. The method of claim 1,
**wherein**
validator (200) broadcasts Bluetooth token to the surrounding area:
- before submission, the received token from the backend system (100) is additionally equipped with at least the user ID, validator ID, vehicle ID, bus line ID, bus stop ID, ticket type and timestamp of submission,
- additionally, validator (200) encrypts it with a special security algorithm and thereby hides the content of the sent token,
- the encryption result represents the content of the sent BT token,

4. The method of claim 1,
**wherein**
validator (200) broadcasts High-Frequency Data-over-Voice token to the surrounding area:
- based on the data of the last sent Bluetooth packet, an additional hash is calculated with the help of a security algorithm, which represents the encrypted checksum of the BT token,
- the encryption result represents the content of the sent HF token,

5. The method of claim 1,
**wherein**
validator (200) broadcasts Bluetooth and High-Frequency Data-over-Voice tokens to the surrounding area:
- Bluetooth token is repeatedly sent as the standard advertising packet,
- High-Frequency token is broadcasted at the highest possible frequency that smart mobile devices can still receive, so as not to disturb the surroundings,

6. The method of claim 1,
**wherein**
mobile application (301) receives BT token and then immediately HF token:
- validation of the BT token is done with the HF token,
- the same security algorithm as in the validator (200) is used,
- validation is successful only when the last received HF token successfully validates the content of the previously received BT token,

7. The method of claim 1,
**wherein**
backend receives the data from the user's mobile application (301):
- algorithms check the validity of the received BT/HF token equipped with additional data,
- if the received package is valid, the balance on the user's stored value account (SVA), rights to the desired type of ticket and all other received information are additionally checked,
- based on the result, the algorithm decides whether the validation is successful or not,

8. The method of claim 1,
**wherein**
mobile application (301) for ticket verification comprising the steps of:
- the user's mobile application (301) generates a QR code and displays it on the LCD screen,
- the inspector's mobile application (401) scans the QR code and locally checks the validity of the scanned data,
- if the data is appropriate, it is sent to the backend system (100) for verification,
- the backend system (100) decrypts the received data, checks the content, compares it with the data in the database and returns a response to the inspector's mobile application (401),
- in this way, the inspector obtains information about the ticket status (valid or invalid),

9. The method of claim 1,
**wherein**
user's mobile application (301) generates a QR code for ticket verification purposes:
- the algorithm encrypts the data of the already confirmed ticket validation, which is securely stored in the mobile application storage,
- encrypted content represents the data that is written in QR code format and is displayed in the mobile application (301) to be scanned by the inspector.
